# EUROPEAN PATENT SPECIFICATION

(11) **EP 2 782 456 B1**
(45) Date of publication and mention of the grant of the patent: **09.09.2015**
(21) Application number: 12780488.8
(22) Date of filing: 30.10.2012
(51) Int. Cl.: A23F 3/06, A23F 3/08

(54) **A PROCESS FOR PRODUCING TEA PRODUCT**
VERFAHREN ZUR HERSTELLUNG EINES TEEPRODUKTS
PROCÉDÉ POUR PRODUIRE UN PRODUIT À BASE DE THÉ

(30) Priority: 22.11.2011 IN MM32732011
(43) Date of publication of application: 01.10.2014
(73) Proprietor: Unilever N.V., 3013 AL Rotterdam (NL); Unilever PLC, London, Greater London EC4Y 0DY (GB)
(72) Inventor: BASAVARAJU, Lokesh, Whitefield Bangalore 560 066 (IN); GUTTAPADU, Sreeramulu, Whitefield Bangalore 560 066 (IN); PALAGIRI, Swathy, Whitefield Bangalore 560 066 (IN); PENDEM, Anjaneyulu, Whitefield Bangalore 560 066 (IN); PURUSHOTHAMAN, Poovizhi, Ponnammal, Whitefield Bangalore 560 066 (IN)
(74) Representative: Askew, Sarah Elizabeth
(86) International application number: PCT/EP2012/071448
(87) International publication number: WO 2013/075912

(56) References cited:
- EP-A2- 1 365 657
- WO-A1-2011/047991
- KR-A- 20090 109 679
- KR-A- 20110 014 885
- BANG M A ET AL: "Preparing catechin-improved green tea for preparing composition for use as anti-obesity composition for preventing and treating hyperlipidemia and for use as food additive, involves anaerobically-processing tea leaf", WPI / THOMSON,, vol. 2010, no. 23, 21 October 2009 (2009-10-21), XP002612334,

## Description

### Technical field

The present invention relates to a process for producing a tea product. More particularly the present invention relates to a process for producing a black tea product with enhanced sensorials.

### Background

Tea is one of the most preferred beverages that are consumed throughout the world. There are many kinds of tea: some examples include black tea, green tea, oolong tea, white tea etc. In these tea products different formats are also available e.g. leaf tea, ready-to-drink tea, tea juice etc. Different product formats are preferred by different consumers.

The health benefits of tea are mainly due to the presence of polyphenols such as Catechins, theaflavins etc. Catechins, which include epigallocatechin gallate (EGCG), epicatechin (EC), epicatechin gallate (ECG), and epigallocatechin (EGC), are the major polyphenolic compounds in green tea. Theaflavin and its derivatives, known collectively as theaflavins (TF), are antioxidant polyphenols, that are formed from catechins present in the tea leaf during the enzymatic oxidation of the tea leaf to form black tea.

There are consumers for all kinds of tea products and for different formats. Black tea is believed to be more popular than any other kind of tea because of its sensorials. Black tea is consumed by large number of people throughout the globe.

Conventional black leaf tea production involves the following steps of manufacture: (i) withering of fresh leaves of the plant *Camellia sinensis,* which is a process where plucked tea leaves are allowed to lose moisture, e.g. in a shallow trough, and during which biochemical reactions occur causing the formation of many beneficial compounds including aroma compounds; (ii) maceration of the withered leaves which is a process where the tea cellular structure is broken which causes further biochemical reactions to occur; (iii) fermentation of the macerated leaves in which enzymes in the tea leaf use atmospheric oxygen to oxidise various substrates to produce coloured products; and (iv) drying of the fermented leaves at high temperatures to stop the enzyme activity and bring down the moisture to less than 8 to 10% to produce the black leaf tea.

The people who prefer to consume black tea are unable to get a good amount of catechins, because in black tea the amount of catechins is significantly less than that of green tea.

There have been attempts to enhance the characteristics of black tea to provide more benefit to consumers who prefer to consume black tea.

GB 692778 (ALEXANDER MAURICE HUGO BAKE, 1953) discloses, in tea manufacture, that fresh leaf is subjected to the stages of withering, bruising, twisting, fermenting, enzyme-killing and drying, or a selected sequence of these stages, while in a single closable rotatable container which can be heated and placed under vacuum or both.

US 6254902 (Lipton, 2001) discloses a method for processing whole leaf tea that involves impregnating tea leaves with liquid carbon dioxide within a pressure vessel, depressurising the vessel at a rate that is sufficient to freeze the liquid carbon dioxide, applying sufficient heat to cause the frozen carbon dioxide to sublime and consequently initiate fermentation within the leaves, allowing the tea to ferment for a time that is sufficient to achieve desired liquor properties, and drying the fermented product to yield the whole leaf tea. An apparatus for manufacturing such a leaf tea is also described.

KR20110014885 describes a manufacturing method for black tea with enhanced theaflavin content.

KR20090109679 discloses a method for preparing catechin-rich green tea.

None of these prior art documents discloses a black tea product which has a relatively high amount of catechins, a high amount of theaflavins and a high amount of polyphenols made by a process which does not include the addition of any exogenous theaflavins and/or catechins.

Therefore there is a need for providing a tea product which has relatively high amount of catechins, a high amount of theaflavins and high amount of polyphenols made by a process without addition of any exogenous theaflavins and/or catechins and which also has the sensorials of black tea.

### Objects of the invention

It is therefore an object of the present invention to provide a tea product with a relatively high amount of catechins.

It is another object of the present invention to provide a tea product with a relatively high amount of theaflavins.

It is a further object of the present invention to provide a tea product with enhanced sensorials.

It is yet another object of the present invention to provide a process for producing a tea product with a relatively high amount of catechins and theaflavins, and with enhanced sensorials.

It is yet a further object of the present invention to provide a black leaf tea product with a relatively high amount of catechins and theaflavins without the addition of any exogenous catechins and/or theaflavins.

The present inventors have surprisingly found that tea products obtained by a process involving a step of anaerobic incubation at specific temperatures and for specific durations have improved sensorials, thereby satisfying one or more of the aforesaid objects.

### Summary of the invention

Accordingly the present invention provides a process of preparation of a black leaf tea product comprising the steps of:
a. taking fresh tea leaf;
b. incubating the fresh leaf at a temperature in the range 4 °C to 60 °C under anaerobic conditions for a period of 4-36 hours;
c. subjecting the incubated leaf to comminution ;
d. fermenting the comminuted leaf by keeping the leaf at a temperature of 15-35°C for 15 minutes to 3hours; and,
e. drying the fermented tea leaf at a temperature of 80-130°C to obtain the black leaf tea product.

These and other aspects, features and advantages will become apparent to those of ordinary skill in the art from a reading of the following detailed description. For the avoidance of doubt, any feature of one aspect of the present invention may be utilized in any other aspect of the invention. The word "comprising" is intended to mean "including" but not necessarily "consisting of" or "composed of." In other words, the listed steps or options need not be exhaustive. It is noted that the examples given in the description below are intended to clarify the invention and are not intended to limit the invention to those examples per se. Similarly, all percentages are weight/weight percentages unless otherwise indicated. Except in the operating and comparative examples, or where otherwise explicitly indicated, all numbers in this description indicating amounts of material or conditions of reaction, physical properties of materials and/or use are to be understood as modified by the word "about". Numerical ranges expressed in the format "from x to y" are understood to include x and y. When for a specific feature multiple preferred ranges are described in the format "from x to y", it is understood that all ranges combining the different endpoints are also contemplated.

### Detailed description of the invention

"Tea" for the purposes of the present invention means material from Camellia sinensis var. sinensis and/or Camellia sinensis var. assamica. Especially preferred is material from var. assamica as this has a higher level of tea actives than var. sinensis.

"Leaf tea" for the purposes of this invention means a tea product that contains tea leaves and/or stem in an uninfused form, and that has been dried to a moisture content of less than 30% by weight, and usually has a water content in the range 1 to 10% by weight (i.e. "made tea").

"Black tea" refers to substantially fermented tea.

"Fermentation" refers to the oxidative and hydrolytic process that tea undergoes when certain endogenous enzymes and substrates are brought together, e.g., by mechanical disruption of the cells by maceration of the leaves. During this process colourless catechins in the leaves are converted to a complex mixture of yellow and orange to dark-brown polyphenolic substances.

"Fresh tea leaves" refers to tea leaves, buds and/or stem that have never been dried to a water content of less than 30% by weight, and usually have water content in the range 60 to 90%.

As used herein the term "expressing juice" refers to squeezing out juice from fresh tea leaves using physical force, as opposed to extraction of tea solids with the use of a solvent. Thus the term "expressing" encompasses such means as squeezing, pressing, wringing, spinning and extruding. It is possible that a small amount of solvent (e.g. water) is added to the fresh leaves during the expression step. However, in order to prevent significant extraction of tea solids by the solvent, the moisture content of the leaves during expression is that of fresh tea leaves as defined hereinabove. In other words, during the expression step, the moisture content of the tea leaves is between 30 and 90% by weight, more preferably between 60 and 90%. It is also preferred that the fresh leaves are not contacted with non-aqueous solvent (e.g. alcohols) prior to or during expression, owing to the environmental & economic problems associated with such solvents.

The term "tea solids" as used herein means the solid content of the tea juice determined by gravimetry.

The term "water soluble tea solids" as used herein means water extract of the tea solids, that is the soluble matter extracted from the tea solids. It is determined by the extraction of soluble matter from a test portion by boiling water under reflux, filtration, washing, drying and weighing of the hot-water-insoluble residue, and calculation of the water extract.

### The process

### Fresh tea leaf

Step (a) comprises taking fresh tea leaf. The fresh leaf may be selected as two leaves and a bud, three leaves and a bud, or more than three leaves and a bud. The duration of time between step (a) and step (b) is preferably less than 24 hours, more preferably less than 12 hours and most preferably less than 8 hours. However, it is possible that the duration of time between step (a) and step (b) is longer than 24 hours if the tea leaf is stored at temperature less than 5 °C.

### Anaerobic withering

Step (b) includes incubating the selected leaf at a temperature in the range 4 °C to 60 °C under anaerobic conditions for a period of 4-36 hours. The term "anaerobic conditions" as used herein means that the gas phase in contact with the leaf has less than 3% oxygen by volume. The amount of oxygen in the gas phase in contact with the leaf is preferably less than 2%, more preferably less than 1%. It is particularly preferred that the gas phase in contact with the leaf is substantially free of oxygen.

### Anaerobic conditions:

The anaerobic conditions are optionally achieved by:
i. placing the fresh tea leaf in a container, and closing the container, or;
ii. placing the tea leaf in a container, purging a gas other than oxygen through the container, and closing the container, or placing the leaf in an airtight chamber or under vacuum.

Preferably, the anaerobic conditions in the step (b) are achieved by:
Placing the fresh tea leaf in a container, and closing the container, or;
Placing the tea leaf in a container, purging a gas other than oxygen through the container, and closing the container.

By placing the fresh leaf in a container and closing the container, the oxygen concentration in the gas phase decreases with time and anaerobic conditions are achieved after keeping the container closed for a certain amount of time. The container is closed for a duration of preferably greater than about 3 hours, more preferably greater than 4 hours and most preferably greater than about 6 hours or even greater than about 8 hours.

Alternatively and more preferably, the anaerobic conditions are achieved by placing the leaf in a container, purging a gas other than oxygen through the container and closing the container. The gas other than oxygen is preferably nitrogen or carbon dioxide, more preferably nitrogen.

Once the container is closed in step (b)(i) or(b)(ii) above, there is no particular restriction as to the pressure in the container. The pressure inside the closed container is preferably from 1-1000 mm Hg absolute, more preferably 10-800 mm Hg absolute and most preferably about 20.

It is preferred that the moisture loss from the leaf during the step (b) is as low as possible. This is advantageously and conveniently achieved by carrying out the step (b) under closed conditions. The incubated tea leaf after step (b) comprises water in the range of preferably from 70 to 75% by weight.

### Incubation temperature:

Step (b) is at a temperature in the range 4 °C to 60 °C, preferably in the range 4-55 °C, more preferably in the range 10-40 °C.

### Duration of anaerobic incubation:

The fresh leaf is incubated under anaerobic conditions for a period of 4-36 hours, preferably for a period of 6-30 hours, more preferably for a period of 8-25 hours, most preferably for a period of 10-24 hours.

### Comminution

After the incubation step the incubated leaf is subjected to comminution. This may preferably be carried out by crushing, tearing and curling which is known as CTC. One or more CTC steps may be carried out. In this step the incubated leaf breaks up and releases enzymes that exist in the leaf.

Alternatively after the incubation step, the incubated tea leaf is rolled in an orthodox roller or comminuted in a rotorvane or combination thereof. During these steps precursors present in the tea leaf become amenable to the enzymes.

### Fermentation

The macerated leaf then undergoes fermentation. Fermentation is carried out by keeping the leaf at a temperature of 15-35°C for from 15 minutes to 3 hours. Preferably the temperature of the fermentation is between 25-35°C and more preferably around 30-35°C. The time for fermentation preferably is from 30 minutes to 3 hours and more preferably 1-3 hours. In this stage the leaf undergoes enzymatic reactions which produce the typical black tea characteristics.

The fermented tea leaf may then be dried. During the drying step, the incubated tea leaf is dried to a moisture content of preferably less than 10% by total mass of the tea leaf, more preferably less than 5 % by total mass of the tea leaf, to obtain the black leaf tea product.

The drying step is preferably carried out by thermal drying, freeze drying or vacuum drying.

Thermal drying is preferably carried out by contacting the leaf with air; with the temperature of air being preferably 80-130 °C, more preferably 90-130 °C, most preferably 100-120 °C. Thermal drying may be carried out in any conventional dryer. However, a fluidized bed dryer or a tray dryer is particularly preferred for thermal drying.

The leaf can also be dried by vacuum drying. During vacuum drying the tea leaf is subjected to an absolute pressure of preferably from 5 to 500 mm Hg, more preferably from 50 to 300 mm Hg and most preferably from 100 to 200 mm Hg. Vacuum drying is carried out at a temperature in the range of preferably 20-70°C, more preferably 25-60 °C and most preferably 30-55 °C. Vacuum drying may be carried out in any suitable vacuum drier, preferably in a rotary vacuum drier.

Optionally the process includes a further step of squeezing out juice from the tea leaf thereby produce leaf residue and tea juice. This step is preferably carried out after maceration and before the fermentation stage.

The amount of expressed juice is preferably at least 50 mL per kg of the fresh tea leaves. The expression step may be achieved in any convenient way so long as it allows for separation of the tea juice from the leaf residue and results in the required quantity of juice. The machinery used to express the juice may, for example, include a hydraulic press, a pneumatic press, a screw press, a belt press, an extruder or a combination thereof. Alternatively, the juice and the leaf residue may separated by filtration or centrifugal separation.

The juice may be obtained from the macerated leaf in a single pressing or in multiple pressings of the macerated leaf. Preferably the juice is obtained from a single pressing as this allows for a simple and rapid process.

In order to minimize generation of off-flavours in the leaf tea and/or juice, it is preferred that the expression step is performed at ambient temperature. For example, the leaf temperature may be from 5-40 °C, more preferably 10-30 °C.

The time and pressure used in the expression step can be varied to yield the specified amount of juice. Typically, however, the pressures applied to express the juice will range from 0.5 MPa (73 psi) to 10 MPa (1450 psi). The time over which the pressure is applied will typically range from 1 s to 1 hour, more preferably from 10 s to 20 minutes and most preferably from 30 s to 5 minutes.

The tea juice thus obtained is preferably pasteurized to obtain a tea juice product. The pasteurization is preferably carried out by heating the tea juice at a temperature of 70 to 110°C.

Optionally, the leaf residue is processed further which comprises a step of drying the fermented leaf residue at a temperature of 80-130°C, preferably 90-130°C more preferably 100-130°C to obtain leaf residue product.

There may be an optional further fermentation step of the leaf residue by keeping the leaf residue at a temperature of 15-35°C for 15 minutes to 2 hours before drying.

### Avoidance of extraction step prior to incubation

It is preferred that there is no step of extraction of tea leaf prior to incubation. By extraction it is meant the step of mixing tea with aqueous or non-aqueous solvent to extract the soluble solids in the tea.

### Tea Products obtained by the process of the present invention

The process of the present invention provides tea products with higher catechins, higher theaflavins and higher polyphenols with superior sensorials.

In one embodiment the present invention provides a black leaf tea product. The black leaf tea product as obtained by the process of the present invention comprises 5 to 12%, preferably 5 to 11% and more preferably 5 to 10 % of catechins by dry mass of leaf tea.

In another embodiment the present invention provides a liquid tea essence product.

In a further embodiment the present invention provides a leaf residue product.

Now the invention will be demonstrated in terms of following non-limiting examples.

### Examples

### Measurement Methods:

### Sample Preparation for measuring Total polyphenols (TPP), theaflavins (TF), catechins and Total soluble solids (TSS) content:

The raw tea leaf was obtained from tea plantations in the southern part of India.

### For black tea:-

A solvent mix comprising methanol and water in a ratio of 4:6 was used for extraction. The extraction solvent mix was kept in a water bath at 60°C prior to using for extraction. 100mg of made tea was placed in an extraction tube and 5 ml of the extraction solvent was added to it. The mixture was kept for 20 min in an ultrasonicator bath maintained at 60°C. The extraction mix was allowed to cool to room temperature and centrifuged at 3000g for 15 min. The supernatant was collected in a 10 ml volumetric flask. The same extraction procedure was repeated with residue from centrifugation using fresh extraction solvent. Both the extracts were mixed and final volume was made to 10ml. These extracts were used for catechin analysis, Theaflavin Analysis and Total Polyphenol analysis.

### For Black tea Infusion:-

The infusion was prepared by adding 100 ml of boiling water to 2g of dried leaf, allowing it to stand for 2 min and stirring once before straining. The Infusion is used to analyse for Catechins, TF, TPP and TSS.

### For Liquid juice product:-

The tea juice obtained from mechanical pressing is centrifuged at 3500g for 30 minutes and the supernatant is heat treated in a closed container at 85°C for 12 minutes and cooled to ambient temperature and analysed for catechins, TF and TPP.

### (a) Theaflavins (TF) content:

Samples were analysed by HPLC using an octadecylsilica (C18) column (Novapak ex. Waters, 3.9 mm i.d. × 150 mm) with detection at a wavelength of 380 nm, column temperature of 40°C, injection volume of 20 micro L and flow rate of 1 mL/min. The mobile phases for the theaflavin analysis were 2% (v/v) acetic acid in water (as mobile phase A) and acetonitirile (as mobile phase B). A linear gradient from 8% B to 69% B over 50 min was used to separate the theaflavins following which the column was equilibrated with 8% of buffer A for 5 min. Pure theaflavins (Sigma Aldrich, > 90%, HPLC grade) were used as standard for quantification.

### (b) Catechins content:

Total catechin contents were determined using the ISO method for the determination of catechins in green and black tea, using high performance liquid chromatography (ISO 14502-2:2005).

### (c) Colour measurement:

Colour (CIE L*a*b* values) was measured using a Hunter lab Ultrascan XE (Model-USXE/UNI version 3.4, Hunterlab Associates Laboratories Inc. Virginia). A halogen cycle lamp was used as the light source. The illuminant used was D65 and the measurements were made at 10°-Observer angle. Measurements were made using a quartz cuvette of 10 mm path length. Tea leaf was filled up to the brim in the cuvette and placed in the instrument for color measurement. The instrument was calibrated using a standard white tile (Hunterlab Duffuse/8°, mode-RSEX, Port-1" and area- large) in accordance with the instructions provided in the instructions manual. The L*a*b* values were measured at room temperature (~25°C).

The maximum value for L* is 100, which represents a perfect reflecting diffuser. The minimum is L*=0, which represents black. The a* and b* axes have no specific numerical limits. Positive a* is red and negative a* is green. Similarly, positive b* is yellow and negative b* is blue.

### (d) Total soluble solids (TSS) measurement: (ISO9768:1994 (E))

A dry pan was taken and kept in a hot air oven for 2 hrs at a temperature of 110°C. The pan was then placed in a dessicator for weighing; the reading was noted down and the pan was kept back in the dessicator immediately and then placed in the hot air oven.

2 gm of black tea was taken in a paper cup. After that 100 mL of boiling water at 100°C was added to the black tea. The solution was stirred for 2 minutes. After 2 minutes the liquor was filtered using a Whatman 541 filter paper. The filtrate was collected in a beaker and the volume was made up 100 mL with deionised water.

After that the 100ml of the hot tea liquor was put in the weighed pans and placed on water bath maintained at a 90-100°C for evaporation. After complete evaporation the pan was taken and wiped with a clean cloth to remove any remaining water from the bottom and kept in a hot air oven for drying for 12 hrs at 110°C.

The final weight of the pan was taken and subtracted from the initial weight to obtain the amount of soluble solids in the tea.

### (e) Total polyphenols (TPP) content:

Total polyphenol contents were determined using the ISO method for the determination of content of total polyphenols in tea - Colorimetric method using Folin-Cicalteu reagent (ISO 14502-1:2005).

### Effect of temperature on the characteristics of the black leaf tea product:

Fresh tea leaves from the Devershola plantation (southern India) were taken and were incubated in an air-tight aseptic plastic bag, sealed and incubated for 18 hrs at different temperatures according to the following Table 1 a. After that the tea leaves were subjected to CTC (cut tear curl) for 4 times to obtain macerated dhool. The macerated dhool was fermentated (exposed to air at 25 °C) for 90 minutes followed by drying the fermented dhool at 120°C till the moisture level went down to less than 5% by weight. As a control, regular black tea was taken which had not undergone anaerobic incubation (i.e. outside the scope of the present invention). The samples were analyzed for TPP, TF, Catechins and TSS content. The results are summarized below in Table 1 a.

The same black tea leaf products were used for making a black tea infusion by following the procedure as stated above. The infusions were analyzed for TPP, TF, Catechins and TSS content and the results are summarized below in Table 1 b.

Example numbers with a suffix "i" represent the infusions. E.g. example number '1' represents the leaf tea product where the incubation temperature is 25°C and example number '1 i' represents the infusion made from the leaf tea product of example 1. This way of numbering examples continues throughout the specification.

**Table 1a: On the leaf**

| Example Number | Temperature | TPP% | TF% | Catechins% | TSS (g/100g) |
|---|---|---|---|---|---|
| A | Control | 15.22 | 1.18 | 4.18 | 0.35 |
| 1 | 4°C | 14.43 | 1.09 | 5.20 | 0.37 |
| 2 | 25°C | 16.07 | 1.23 | 5.81 | 0.38 |
| 3 | 40°C | 18.98 | 1.15 | 5.37 | 0.39 |
| 4 | 55°C | 22.95 | 0.53 | 11.58 | 0.46 |

From the Table 1 a, it is evident that anaerobic incubation as per the process of the present invention provides tea products which have higher catechins content and higher soluble solids content than the control. The effect of incubation temperature on the leaf characteristics is also shown in the above table. At 25°C (example no. 2) the leaf product has the highest amount of theaflavins and also a significant amount of catechins. At 55°C (example no. 4) the leaf product has the highest amount of catechins and soluble solids. Thus, depending on the need, it is possible to tune the black tea product according to the process of the present invention.

**Table 1b: In the infusion**

| Example number | TPP | TF | Catechins | TSS |
|---|---|---|---|---|
| | mg/100ml | | | |
| Ai | 167 | 7 | 58 | 307 |
| 1i | 164 | 5 | 77 | 299 |
| 2i | 181 | 7 | 77 | 329 |
| 3i | 206 | 8 | 95 | 335 |
| 4i | 293 | 4 | 185 | 429 |

From the above table it is clear that infusions made by using the leaf tea of the present invention have higher catechins. It is also noted that example number 2i, 3i and 4i have higher TPP and TSS than Ai.

### Effect of duration of anaerobic incubation on the characteristics of the black leaf tea product:

Fresh tea leaves from the Devershola plantation (southern India) were placed in an air-tight aseptic plastic bag, sealed and incubated for different times as mentioned in Table 2a at ~ 25°C. After that the tea leaves were subjected to CTC (cut tear curl) for 4 times to obtain macerated dhool. The macerated dhool was fermentated (exposed to air at 25 °C) for 90 minutes. As a control regular black tea was taken which had not undergone anaerobic incubation (outside the scope of the present invention). The samples were analyzed for TPP, TF, Catechins and TSS content. The results are summarized below in Table 2a.

The same leaf was used for making the black tea infusion by following the procedure as stated above. The infusions were analyzed for TPP, TF, Catechins and TSS content and the results are summarized below in Table 2b.

**Table 2a: On the Leaf**

| Example number | Duration of anaerobic incubation | TPP% | TF% | Catechins% | TSS (g/100g) |
|---|---|---|---|---|---|
| B | Control black tea | 19.88 | 1.13 | 4.83 | 36.50 |
| 5 | 4 hours | 20.39 | 1.54 | 5.90 | 37.00 |
| 6 | 18 hours | 16.58 | 1.39 | 6.41 | 34.75 |
| 7 | 24 hours | 17.87 | 1.55 | 7.22 | 36.50 |

From Table 2a, it is evident that the process of the present invention provides a black leaf tea product with higher catechins and theaflavins. With increasing duration of anaerobic incubation the amount of catechins in the product increased.

**Table 2b: In the infusion**

| | TPP | TF | Catechins | TSS |
|---|---|---|---|---|
| Example Number | mg/100ml | | | |
| Bi | 155 | 7 | 81 | 454 |
| 5i | 191 | 12 | 103 | 535 |
| 6i | 196 | 11 | 118 | 517 |
| 7i | 221 | 11 | 125 | 556 |

From Table 2b it is clear that infusions made using the leaf tea which is inside the scope of the present invention (examples 5i, 6i and 7i) have higher TPP, higher TF, higher catechins and higher soluble solids than the tea leaf which is outside the scope of the present invention (example Bi). It is noted that with the increase in anaerobic incubation time the quality of the infusion gets better.

### Effect of temperature on the characteristics of the Liquid Tea Essence (LTE) product:

Fresh tea leaves from the Devershola plantation (southern India) were placed in an air-tight aseptic plastic bag, sealed and incubated for 18 hrs at different temperatures according to the following Table 3. After that the tea leaves were subjected to CTC (cut tear curl) for 4 times to obtain macerated dhool. The macerated dhool was fermented (exposed to air at 25 °C) for 60 minutes. Then the juice was squeezed out from the dhool by a Pneumatic Press operating at a pressure of 6 kg/cm². The juice obtained was centrifuged at 1500g in a REMI centrifugation machine, to separate the supernatant from the residue. The supernatant is liquid tea essence. There was one sample which was a control: it had undergone all the above steps except anaerobic incubation.

The liquid tea essence was subjected to TPP, TF, Catechins and TSS content measurement, the results of which are summarized below in Table 3.

**Table 3**

| | | TPP | TF | Catechins | TSS |
|---|---|---|---|---|---|
| Example Number | Sample | mg/ml | | | |
| C | Control | 11.513 | 0.144 | 0.338 | 72 |
| 8 | 4°C | 10.058 | 0.127 | 0.353 | 61 |
| 9 | 25°C | 11.006 | 0.136 | 0.370 | 58 |
| 10 | 40°C | 13.369 | 0.179 | 0.570 | 71 |
| 11 | 55°C | 20.049 | 0.219 | 1.646 | 81 |

From Table 3 it is evident that LTE made using the process of the present invention (examples 8, 9, 10 and 11) provides LTE with higher catechins. This effect is more prominent at higher incubation temperatures. The amounts of catechins gradually increased with an increase in incubation temperature. The amounts of theaflavins are significantly higher at 40°C and 50°C.

### Effect of duration of anaerobic incubation on the characteristics of the Liquid Tea Essence product:

Fresh tea leaves from the Devershola plantation (southern India) were placed in an air-tight aseptic plastic bag, sealed and incubated for different times as mentioned in Table 4 at ~ 25°C. After that the tea leaves were subjected to CTC (cut tear curl) for 4 times to obtain macerated dhool. The macerated dhool was fermented (exposed to air at 25 °C) for 60 minutes. Then the juice was squeezed out from the dhool by a Pneumatic Press operating at a pressure of 6 kg/cm2. The juice obtained was centrifuged at 1500g in a REMI centrifugation machine, to separate the supernatant from the residue. The supernatant is liquid tea essence. There was one sample which was a control: it had undergone all the above steps except anaerobic incubation.

The resulting liquid tea essence was subjected to TPP, TF, Catechins and TSS content measurement, the results of which are summarized below in Table 4.

**Table 4**

| | | TPP | TF | Catechins | TSS |
|---|---|---|---|---|---|
| Example number | Sample | mg/ml | | | |
| D | Control | 11.908 | 0.07 | 0.477 | 83 |
| 12 | 4hours | 14.807 | 0.123 | 0.561 | 72 |
| 13 | 18hours | 14.095 | 0.129 | 0.662 | 63 |
| 14 | 24hours | 12.972 | 0.134 | 0.480 | 69 |

From the Table 4 it is clear that LTE made using the process of the present invention (examples 12, 13 and 14) has higher theaflavins, higher TPP and higher catechins. At 4 hours and 18 hours anaerobic duration times the resulting LTE has significantly higher amounts of catechins and theaflavins.

### Effect of temperature on the characteristics of the leaf residue product:

After squeezing out the juice (by following the procedure as stated above in the example of Table 3) the black leaf residue was dried at 130°C in a tray drier for about 20 minutes until it reached a moisture content less than 5% by weight. The leaf residue products were obtained from the samples which were incubated at different temperatures. As a control leaf residue product obtained after producing LTE of example C was taken. The samples were analyzed for TPP, TF, Catechins and TSS content. The results are summarized below in Table 5a.

**Table 5a: On the leaf**

| Example No | Sample | TPP% | TF% | Catechins% | TSS (g/100g) |
|---|---|---|---|---|---|
| E | Control | 18.55 | 1.53 | 4.75 | 0.38 |
| 15 | 4°C | 16.00 | 1.46 | 5.59 | 0.35 |
| 16 | 25°C | 17.05 | 1.35 | 5.00 | 0.36 |
| 17 | 40°C | 20.18 | 1.27 | 6.40 | 0.39 |
| 18 | 55°C | 26.36 | 0.62 | 11.52 | 0.42 |

In the above table leaf residue product of Examples 15, 16, 17 and 18 were obtained after producing LTE of examples 8, 9, 10 and 11 respectively. From Table 5a it is evident that the leaf residue product of examples 15, 16, 17 and 18 is a better product than that of example E. The products obtained have higher catechins contents than example E. A different incubation temperature gives different benefits.

The same leaf residue products were used for making black tea infusions by following the procedure as stated above. The infusions were analyzed for TPP, TF, Catechins and TSS content and the results are summarized below in Table 5b.

**Table 5b: In the infusion**

| | TPP | TF | Catechins | TSS |
|---|---|---|---|---|
| Example number | mg/100ml | | | |
| Ei | 174 | 8 | 65 | 281 |
| 15i | 266 | 7 | 73 | 260 |
| 16i | 176 | 9 | 77 | 273 |
| 17i | 209 | 9 | 92 | 309 |
| 18i | 294 | 6 | 182 | 387 |

From the above Table 5b it is clear that examples 15i, 16i, 17i and 18i provides superior infusion than Ei. With increasing incubation temperature the amount of catechins has increased. It is noted that example no 18i has highest TPP, highest catechins and highest TSS.

### Effect of duration of anaerobic incubation on the characteristics of the leaf residue product:

After squeezing out the juice (by following the procedure as stated above in the example of Table 4) the black leaf residue was dried at 130°C in a tray drier for about 20 minutes until it reached a moisture content less than 5% by weight. The leaf residue products were obtained from the samples which were incubated for different times. As a control, the leaf residue product obtained after producing LTE of example D was taken. The samples were analyzed for TPP, TF, Catechins and TSS content. The results are summarized below in Table 6a.

**Table 6a: On the leaf:**

| Example number | Sample | TPP% | TF% | Catechins% | TSS (g/100g) |
|---|---|---|---|---|---|
| F | Control | 17.19 | 1.42 | 5.81 | 0.37 |
| 19 | 4 hours | 21.37 | 1.53 | 5.91 | 0.31 |
| 20 | 18 hours | 17.08 | 1.05 | 6.76 | 0.34 |
| 21 | 24 hours | 21.67 | 2.25 | 8.15 | 0.35 |

In the above table leaf residue product of examples 19, 20 and 21 were obtained after producing LTE of examples 12, 13 and 14 respectively. From Table 6a it is evident that leaf residue product of examples 19, 20 and 21 provide tea product with higher catechins than F. The amount of catechins increased with increasing the duration of anaerobic incubation. When the duration of anaerobic incubation is 24 hours the resulting product has the highest amount of catechins and theaflavins.

The leaf residue products of Table 6a were used for making black tea infusiosn by following the procedure as stated above. The infusions were analyzed for TPP, TF, Catechins and TSS content and the results are summarized below in Table 6b.

**Table 6b: In the infusion:**

| | TPP | TF | Catechins | TSS |
|---|---|---|---|---|
| Example number | mg/100ml | | | |
| Fi | 209 | 10 | 93 | 464 |
| 19i | 201 | 11 | 94 | 455 |
| 20i | 216 | 13 | 122 | 472 |
| 21i | 227 | 15 | 130 | 475 |

From the above Table 6b it is clear that examples 19i, 20i and 21i provide infusions with higher catechins and theaflavins than Fi. With increasing incubation time the amount of catechins and theaflavins has increased.

### Colour characteristics of the products obtained by the process of the present invention compared with control.

The colour measurement was carried out by following the procedure as discussed in the measurement methods section above. The results are summarized below in Table 7.

**Table 7**

| Example Number | a* Value |
|---|---|
| Bi | 31.23 |
| 5i | 34.65 |
| 6i | 33.80 |
| 7i | 34.38 |
| C | 0.04 |
| 8 | 2.46 |
| 9 | 3.09 |
| 10 | 1.26 |

It is evident from the above Table 7 that tea products produced by the process of the present invention are rich in red colour (which is preferred by the black tea drinking consumers) than the controls.

The black leaf tea product, LTE and leaf residue product was tasted by a group of highly trained tea tasters. After tasting they found that the black leaf tea, LTE and leaf residue products obtained by the process of the present invention have similar sensorials when compared with regular black tea.

From all the above examples it is now clear that by way of the process of the present invention, it is possible to produce a black leaf tea product, a LTE product and a leaf residue product with higher catechins, theaflavins and with higher TPP.

## Claims

1. A process of preparation of a black leaf tea product comprising the steps of:
a. taking fresh tea leaf;
b. incubating the fresh leaf at a temperature in the range 4 °C to 60 °C under anaerobic conditions for a period of 4-36 hours;
c. subjecting the incubated leaf to comminution ;
d. fermenting the comminuted leaf by keeping the leaf at a temperature of 15-35°C for 15 minutes to 3hours; and
e. drying the fermented tea leaf at a temperature of 80-130°C to obtain the black leaf tea product.

2. A process as claimed in claim 1 further comprising a step of squeezing out juice from the fermented tea leaf thereby to produce leaf residue and liquid tea essence.

3. A process as claimed in claim 2 wherein the tea juice is pasteurized to obtain a liquid tea essence product.

4. A process as claimed in claim 2 wherein the leaf residue is dried at a temperature of 80-130°C to obtain leaf residue product.

5. A process as claimed in claim 5 comprising a step of further fermenting the leaf residue by keeping the leaf residue at a temperature of 15-35°C for 15 minutes to 2 hours before drying.

6. A process as claimed in any one of the preceding claims wherein the anaerobic conditions are achieved by:
i. placing the fresh tea leaf in a container, and closing the container, or;
ii. placing the tea leaf in a container, purging a gas other than oxygen through the container, and closing the container, or placing the leaf in an airtight chamber or under vacuum.

7. A process as claimed in any one of the preceding claims wherein there is no step extraction of tea leaf prior to the incubation step.

8. A liquid tea essence product obtained and/or obtainable by the process of claim 2 or 3.

9. A leaf residue product obtained and/or obtainable by the process of claim 4 or 5.

## Patentansprüche

1. Verfahren zur Herstellung eines Schwarztee-Produktes, umfassend die Schritte von:
a. Nehmen von frischen Teeblättern;
b. Inkubation der frischen Blätter bei einer Temperatur im Bereich von 4°C bis 60°C unter anaeroben Bedingungen über einen Zeitraum von 4 bis 36 Stunden;
c. Unterwerfen der inkubierten Blätter der Zerkleinerung;
d. Fermentieren der zerkleinerten Blätter, indem die Blätter 15 Minuten bis 3 Stunden lang bei einer Temperatur von 15 bis 35°C gehalten werden; und
e. Trocknen der fermentierten Teeblätter bei einer Temperatur von 80 bis 130°C, um das Schwarztee-Produkt zu erhalten.

2. Verfahren gemäß Anspruch 1, ferner umfassend einen Schritt des Herauspressens von Saft aus den fermentierten Teeblättern, um dadurch Blattrückstand und flüssige Tee-Essenz herzustellen.

3. Verfahren gemäß Anspruch 2, wobei der Teesaft pasteurisiert wird, um ein flüssiges Tee-Essenz-Produkt zu erhalten.

4. Verfahren gemäß Anspruch 2, wobei der Blattrückstand bei einer Temperatur von 80 bis 130°C getrocknet wird, um Blattrückstandprodukt zu erhalten.

5. Verfahren gemäß Anspruch 5, umfassend einen Schritt des weiteren Fermentierens des Blattrückstandes, indem der Blattrückstand vor dem Trocknen 15 Minuten bis 2 Stunden lang bei einer Temperatur von 15 bis 35°C gehalten wird.

6. Verfahren gemäß irgendeinem der vorhergehenden Ansprüche, wobei die anaeroben Bedingungen erreicht werden durch:
i. Verbringen der frischen Teeblätter in einen Behälter und Verschließen des Behälters, oder;
ii. Verbringen der Teeblätter in einen Behälter, Durchleiten eines Gases anders als Sauerstoff, durch den Behälter und Verschließen des Behälters, oder Verbringen der Blätter in eine luftdichte Kammer oder unter Vakuum.

7. Verfahren gemäß irgendeinem der vorhergehenden Ansprüche, wobei es vor dem Inkubationsschritt keinen Schritt der Extraktion der Teeblätter gibt.

8. Flüssiges Tee-Essenz-Produkt, erhalten und/oder erhältlich mit dem Verfahren gemäß Anspruch 2 oder 3.

9. Blattrückstandsprodukt, erhalten und/oder erhältlich mit dem Verfahren gemäß Anspruch 4 oder 5.

## Revendications

1. Procédé de préparation d'un produit de thé noir en feuille comprenant les étapes de :
a. prise de feuille de thé fraîche ;
b. incubation de la feuille fraîche à une température dans l'intervalle de 4°C à 60°C dans des conditions anaérobies sur une période de 4-36 heures ;
c. soumission de la feuille incubée à un broyage ;
d. fermentation de la feuille broyée en maintenant la feuille à une température de 15-35°C pendant de 15 minutes à 3 heures ; et
e. séchage de la feuille de thé fermentée à une température de 80-130°C pour obtenir le produit de thé noir en feuille.

2. Procédé selon la revendication 1 comprenant de plus une étape de pressage de jus à partir de la feuille de thé fermentée pour produire par-là un résidu de feuille et une essence de thé liquide.

3. Procédé selon la revendication 2, dans lequel le jus de thé est pasteurisé pour obtenir un produit d'essence de thé liquide.

4. Procédé selon la revendication 2, dans lequel le résidu de feuille est séché à une température de 80-130°C pour obtenir un produit de résidu de feuille.

5. Procédé selon la revendication 5 comprenant une étape de fermentation supplémentaire du résidu de feuille en maintenant le résidu de feuille à une température de 15-35°C pendant de 15 minutes à 2 heures avant le séchage.

6. Procédé selon l'une quelconque des revendications précédentes, dans lequel les conditions anaérobies sont réalisées en :
i. plaçant la feuille de thé fraîche dans un récipient, et en fermant le récipient, ou ;
ii. en plaçant la feuille de thé dans un récipient, en purgeant un gaz différent de l'oxygène à travers le récipient, et en fermant le récipient, ou en plaçant la feuille dans une chambre étanche à l'air ou sous vide.

7. Procédé selon l'une quelconque des revendications précédentes, dans lequel il n'y a pas d'étape d'extraction de feuille de thé avant l'étape d'incubation.

8. Produit d'essence de thé liquide obtenu et/ou pouvant être obtenu par le procédé selon la revendication 2 ou 3.

9. Produit de résidu de thé obtenu et/ou pouvant être obtenu par le procédé selon la revendication 4 ou 5.
